(19) Europäisches Patentamt
European Patent Office
Office européen des brevets

(11) **EP 3 819 672 A1**

(12) **EUROPEAN PATENT APPLICATION**

(43) Date of publication:
**12.05.2021 Bulletin 2021/19**

(51) Int Cl.:
**G01S 17/931** (2020.01)  **G01S 17/89** (2020.01)
**G01S 17/87** (2020.01)  **G01S 7/00** (2006.01)
**G01S 17/86** (2020.01)

(21) Application number: **19306455.7**

(22) Date of filing: **08.11.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Outsight**
**75005 Paris (FR)**

(72) Inventor: **BRAVO ORELLANA, Raul**
**75005 PARIS (FR)**

(74) Representative: **Plasseraud IP**
**66, rue de la Chaussée d'Antin**
**75440 Paris Cedex 09 (FR)**

(54) **METHOD AND SYSTEM TO SHARE SCENE MAPS**

(57)     A method carried out in a system comprising at least a first imaging unit (31) mounted on a first entity (ET1) or first vehicle (Vhl), at least a second imaging unit (32) mounted on a second entity (ET2), the method comprising :
- building, from the first imaging unit (31), a first map (61), formed as a floating map, through a simultaneous localization and mapping process (SLAM),
- building, from the second imaging unit (32), a second map (62),
- establishing a data channel (15;16) between first and second entities (ET1,ET2),
- determining if there is at least an overlapping portion (Ov12) between first and second maps (61,62),
- receiving, at the first entity (ET1), part or all the elements of the second map (62), from the second entity (ET2),
- identifying matching candidate solutions to register the second map into the first map,
- registering and appending the second map to the first map of first vehicle.

FIG. 1

EP 3 819 672 A1

**Description**

**FIELD OF THE DISCLOSURE**

Systems and methods for dynamically generating and updating a tridimensional map of an environment surrounding one or more entity(ies), like a vehicle or another mobile entity, are described herein, along with systems and methods for simultaneous localization and mapping ('SLAM' in short).

The disclosure concerns notably the systems and processes to generate and update a rolling tridimensional map for moving vehicles specially autonomous-driving, self-driving or semi-autonomous vehicles. This disclosure also relates to an automotive vehicle equipped with such a system.

It is possible to use the promoted solution in the framework of global systems including terrestrial and aerial vehicles, as well as fixed video surveillance/monitoring systems.

**BACKGROUND OF THE DISCLOSURE**

The present application belongs the field of the generation of tridimensional environment maps that are representative of the surroundings of one or several moving objects and vehicles. These maps are dynamically generated and updated using tridimensional scanners mounted on said vehicles. These maps are called 'floating' maps or otherwise 'rolling' maps, since they are built incrementally along the vehicle travel (i.e. the map has a moving footprint) independently from any absolute geolocation.

Such map comprises a distance for each direction of the field of view, the distance corresponding to the first target reached for a given direction of the field of view. A tridimensional imager/scanner acquires sets of data points, called point clouds, that are representative of the objects located in a local volume of the environment surrounding said imager/scanner, also called a 'scene'. One example of a commonly used tridimensional imagers/scanners is a laser rangefinder such as a light detection and ranging (LIDAR) module which periodically scans its environment using a rotating laser beam. Some special Lidars are able to acquire their environment from a common simultaneous illumination, they are known as 'flash' lidars. Also one can use one or more video camera(s), either with a plurality of 2D camera and/or one or more depth or 3D camera.

The acquired point clouds can be used to generate 3D maps of the environment seen by the vehicles during a travel for mapping purposes. The 3D maps may also be used to assist or to automate the driving of the vehicles, in particular for so-called autonomous vehicles.

However, there may remain some so-called blind zones in such rolling maps, especially when traffic is dense and in certain urban areas.

Therefore, the inventors have endeavored to improve coverage of the rolling tridimensional map of an environment surrounding a vehicle.

**SUMMARY OF THE DISCLOSURE**

According to one aspect of the present invention, it is disclosed a method carried out in a system comprising at least a first imaging unit (31) mounted on a first entity (ET1), the first entity being formed as a first vehicle (Vhl), at least a second imaging unit (32) mounted on a second entity (ET2) independent from the first vehicle (Vhl), the method comprising :

     **a1**- building, from the first imaging unit (31), a first map (61), formed as a floating map, through a simultaneous localization and mapping ('SLAM' in short) process,
     **a2**- building, from the second imaging unit (32), a second map (62),
     **b2**- establishing a data channel (15;16) between first and second entities (ET1,ET2),
     **c**- determining if there is at least an overlapping portion between first and second maps (61,62),
     **d1**- receiving, at the first entity (ET1), part or all the elements of the second map (62), from the second entity (ET2),
     **e1**- identifying matching candidate solutions to register the second map into the first map,
     **f1**- registering and appending the second map to the first map of first vehicle.

*We note that the second entity can be stationary or can be moving. An example of stationary entity is a public video surveillance camera system or a stationary vehicle. An example of moving entity is generally another vehicle.*

*The term "floating map " should be understood as a "rolling map of the scene ", it means here a map which is built incrementally along the travel of the vehicle imaging unit(s) when it (they) move along the respective path of the first vehicle of interest amidst other vehicles. In this sense, "floating map " may otherwise be called 'incremental map', the overall footprint of the map moves along generally with the first vehicle.*

*We note that the "scene " of interest can be also moving along with the vehicle of interest. Areas of interest are situated ahead and aside the vehicle of interest, without excluding backside.*

*The term "imaging unit" refers to a Lidar system or to a 3D camera/video system.*

*Thanks to the above arrangement, the floating map of the first vehicle can be enlarged and complemented from the map of the other entity (video surveillance or other vehicles). This enhances the coverage of the surroundings of the first vehicle.*

*For example, it may happen that a floating map comprise pseudo blind zones created by a close building or another vehicle (e.g. a truck), the promoted method*

*allows the floating map of the first vehicle to be complemented from the map of the second entity; this increases the visibility coverage of the scene. Advantageously, the number and volume of pseudo blind zones can be decreased, and the risks relative to the presence of people or animals in the pseudo blind zones can be eliminated.*

*It should be noted that no common clock is required regarding first and second entities.*

*The clause "part or all the elements of the second map " refers to part or all of the points cloud constituting the map. When partial, the data contains mainly the meaningful point-cloud data, not all items included in the point-cloud data.*

In various embodiments, one may possibly have recourse in addition to one and/or other of the following arrangements, taken alone or in combination.

R2 According to one aspect, the second entity is a second vehicle, moving independently from the first vehicle, wherein the second map is formed as a floating map built through a simultaneous localization and mapping process, the method comprising :

**d2**- receiving, at the second entity, part or all the elements of the first map, from the first entity.

*This situation is nearly symmetrical; each vehicle advantageously benefits from the data available at one another. As soon as there is an overlap portion in the first and second maps, step d1 and can be expressed as a sharing (sending and receiving) of maps between first entity and second entity.*

*This enhances the coverage of the surroundings of the vehicles at stake, even though the vehicles are completely independent and establish a data channel for the first time in response to a geographical proximity.*

R2+ According to one aspect, the second entity can be a *stationary device.* In this case, its geolocation can be known with high accuracy. In this case, the second map includes all the evolutions over time of the scene, e.g. roadworks, on-going building works, ...

R3 According to one aspect, the method further comprises:

> **e2**- identifying matching candidate solutions to register the first map into the second map,
> **f2**- registering and appending the first map to the second map of the second vehicle.

*This situation is fully symmetrical between first and second vehicles, said otherwise both vehicles mutually benefit from the data available at each other.*

R4 According to one aspect, the method may further comprise, before step **b2**-, :

**b1**- determine a short-list of entities or vehicles located in the vicinity of the first vehicle (Vhl), through a basic geolocation function, i.e. GPS or else. *Thereby, we reduce useless attempts to establish communication (or share maps) between vehicles situated far away from one another.*

R5 According to one aspect, the data channel can be a direct communication link, namely a Vehicule-to-Vehicule communication, likewise called 'V2V' by those skilled in the art. *This direct communication can be supported by Wifi standard, a 4G standard, a 5G standard. Data flow capacity must be sufficient to transmit relevant data in a short time, it does imply necessarily high capacity data link. Direct communication is fast and simple and avoids the use of a third party as an in-between entity.*

R6 According to one aspect, the data channel can be an indirect communication link via a third entity. *The third entity can be a remote server, a remote router, or SG-enabled road sign equipment, which serves as a gateway between various vehicles. Interoperability can thus be improved when vehicles do not share a common communication standard and cannot establish a direct communication link.*

R+ According to one aspect, the first vehicle (Vh1) is moving or is stationary, wherein the second vehicle (Vh2) is moving or is stationary. *Said otherwise, speed does not matter; a moving vehicle can benefit from a map built by a stationary vehicle, and conversely a momentarily standstill vehicle can benefit from a map built by a moving vehicle. We note here that one of the vehicles can be a ground vehicle whereas the other one be a flying vehicle (drone, UAV, ...).*

R+ According to one aspect, the method may further additionally comprise a step of excluding ground vehicles which are located on a different floor in a multi-floor building. We *therefore advantageously exclude irrelevant source of data.*

R7 According to one aspect, the imaging first unit (31) and/or the second imaging unit (32) is a Lidar scanner. *Such lidar device exhibits a wide field-of-view, a high distance accuracy, a good spatial resolution, fast updates with a high frame rate.*

R7+ According to one aspect, the imaging unit can be a multi-wavelength Lidar scanner. *Therefore, in this case, the lidar device outputs not only a monochromatic image, but a colored image, bearing additional information; this helps to classify various items seen in the field-of-view/scene.*

R8 According to one aspect, the first and second entities (ET1,ET2) has no common clock and respectively build first and second maps asynchronously with regard to one another. *Unlike other conventional sharing map methods, there is no need to synchronize the processes and there is no need to worry about latency issue. No latency issue exists in the promoted solution herein.*

R+ According to one aspect, the first map exhibits a forward depth of at least 100 m, preferably at least 150 m. *The map built by the first vehicle covers not only the immediate vicinity of the vehicle but also the neighborhood of the vehicle, with a practical range only limited by obstacle(s) present in the neighborhood of the vehicle. When the vehicle is moving forward, the forward depth of the map is at least 100 m, can be at least 150*

*m, or else can be at least 200 m. The lidar device promoted herein can have about 250m as maximum operating range. For fast moving vehicle, this is relevant to have a long distance forward coverage to anticipate any inadvertent event.*

R9 According to one aspect, the first vehicle is travelling on a first lane which is not parallel to a second lane where the second vehicle is travelling. *This feature can be particularly relevant, where first and second are in the vicinity of a city crossroad. Some obstacles present in the scene do not hinder first and second field-of-views the same way, with different pseudo blind zones or masked areas. Map sharing between the two vehicles advantageously alleviates mask area shortcomings and substantially reduce the pseudo blind zones. When a third or even more vehicles are involved, the visibility coverage can be enhanced to full coverage.*

R10 According to one aspect, the first vehicle is travelling on a first lane which is parallel and in opposite direction with regard to a second lane where the second vehicle is travelling. *An information of an entity (object, animal, ..) about to traverse the road is shared between the first and second vehicles.*

R11 According to one aspect, there are provided one or more geo-located landmarks which are used to determine at least an overlapping portion between first and second maps.

*Thereby, use of known landmarks can simplify the process to identify relevant candidates to share map information. It can be some piece of road infrastructure, a bridge, some road sign panel, or else..*

*We note however that the use of known landmark(s) is not necessary in the promoted solution; registration can be performed by any suitable best match algorithm.*

R12 According to one aspect, steps d- to f- are repeated until the first and second vehicles are away from one another, by at least a predetermined distance. *Communication link is interrupted as soon as the link becomes useless for map sharing. It saves resources in terms of memory and communication bandwidth.*

R12+ According to one aspect, steps d- to f- are repeated until the first and second vehicles are moving away from one another, with at least a predetermined relative velocity.

R13 According to one aspect, steps d- to f- are repeated until the first and second vehicles are located on different floors in a multi-floor building. *Even though the two vehicles appears to be at nearly a same geolocation, their surroundings are completely different and therefore there is no relevance to share maps. It decreases the workload and the need for wireless data communication resources, when considering complete parking lot where several vehicles are operating.*

R13 According to one aspect, there may be provided at least a third imaging unit (37) mounted on a third vehicle or mounted on a road/street equipment, and the method comprises a registration of the images outputted by the third imaging unit (37) into the shared map between first and second maps. *Therefore, not only two vehicles can share maps but more than two; additionally, there may be provided stationary imaging unit(s) at particular locations for example at dangerous crossroads to help increase visibility coverage by respective maps of approaching vehicles.*

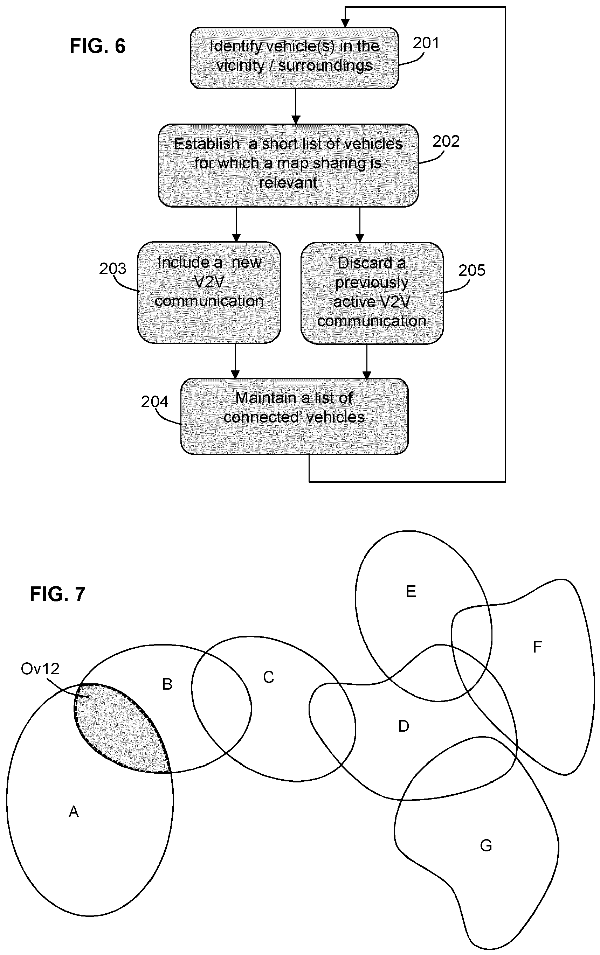

R+ According to one aspect, there may be provided a plurality of imaging units building a plurality of respective maps, and the above sharing process can occur as early as one map exhibits an overlap with another neighboring map, without necessarily having an overlap with all the involved maps. *Said otherwise, a global map can be constructed from a daisy chain configuration linking a plurality of involved maps, as illustrated at Fig 6.*

The instant disclosure is also directed to a system configured to carry out the method exposed above.

The instant disclosure is also directed to a vehicle comprising a system as defined above.

BRIEF DESCRIPTION OF THE DRAWINGS

Other features and advantages of the invention appear from the following detailed description of two of its embodiments, given by way of non-limiting example, and with reference to the accompanying drawings, in which:

- Figure 1 illustrates a diagrammatical top view of one or more vehicle(s) circulating on a road,
- Figure 2 illustrates another diagrammatical top view of one or more vehicle(s) circulating on a city street with a crossroad/junction,

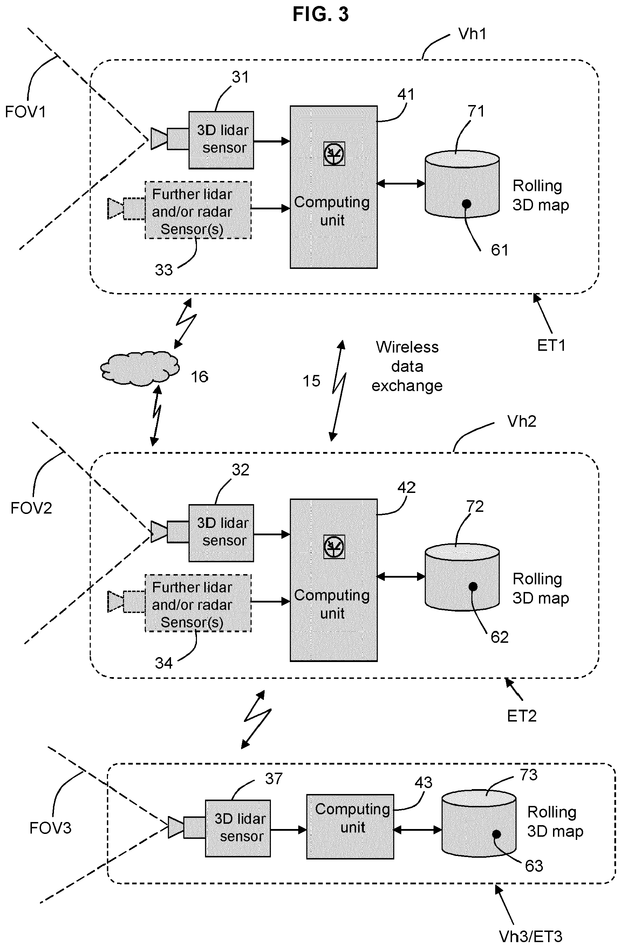

- Figure 3 shows a diagrammatical block diagram of the system promoted in the present disclosure, involving two vehicles,
- Figure 4 illustrates a diagrammatical elevation view of a vehicle of interest circulating on a road,
- Figure 5 is a chart illustrating the rolling maps sharing process, involving two vehicles.
- Figure 6 is a chart illustrating the management of a list of current communication links,
- Figure 7 is a chart illustrating an extended map built from a sharing process among a plurality of vehicles.

DETAILED DESCRIPTION OF THE DISCLOSURE

In the figures, the same references denote identical or similar elements. For sake of clarity, various elements may not be represented at scale.

General context

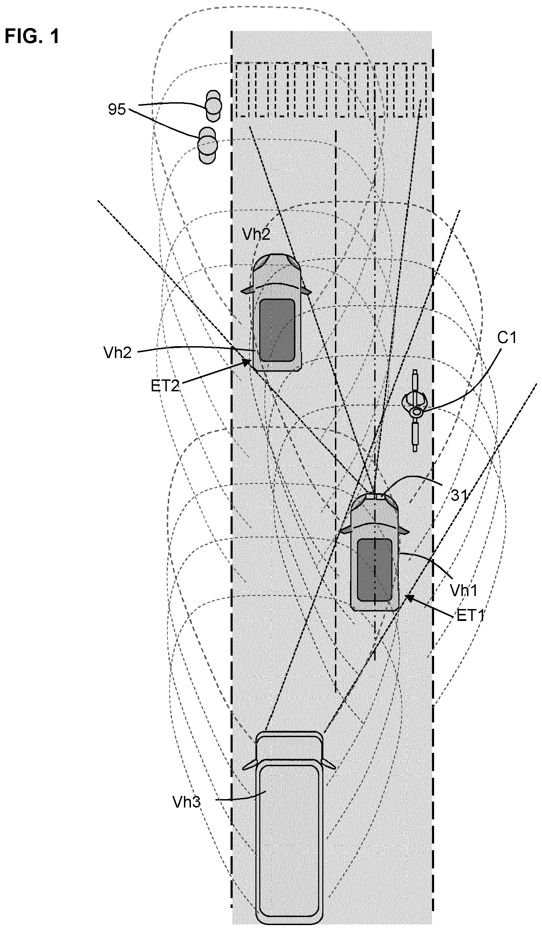

Figure 1 shows diagrammatically a top view of a road where several vehicles are moving. The first vehicle denoted **Vh1** is of particular interest, since it is equipped with at least two imaging units. The second vehicle denoted **Vh2** moves in the same direction as per Vh1, slightly ahead of **Vh1**.

In a broader scope of the present disclosure, the first vehicle **Vh1** is called a first entity denoted **ET1**, and the second vehicle **Vh2** is called a second entity denoted **ET2**. However, the second entity **ET2** can be a completely different type of device like a public video surveillance camera system, or a traffic monitoring camera system.

Besides, although road vehicles are represented in the figures, the term "vehicle" herein encompasses not only road vehicle but also drones, aircrafts, boats, mobile robots,...

A third vehicle denoted **Vh3** moves in the same direction as per Vh1, behind Vh1. Additionally, there may be among other things : road/traffic signs on the side of the road or above the road, trees, bushes, etc...

There may be also buildings in dense city areas, those buildings can be close to the street border. There may be also street furniture like a bus stop shelter, a food truck,....

Besides fixed entities, there may be also possibly moving entities likes animals, people **95**, trash bins, objects blown by the wind, etc..

Besides, it is to be considered any kind of users of the road like bicycles **C1, C2**, scooters, motorcycles, trucks, buses, vehicles with trailers, not to mention also pedestrians **95,96**. Some of them are moving while others can be stationary either at the side of the road or on traffic lane.

The vehicles of interest **Vh1, Vh2, Vh3** travel in an environment also named the ***'scene'***.

Some objects or entities present in the scene may serve as landmarks for the mapping process and sharing process to be detailed later on.

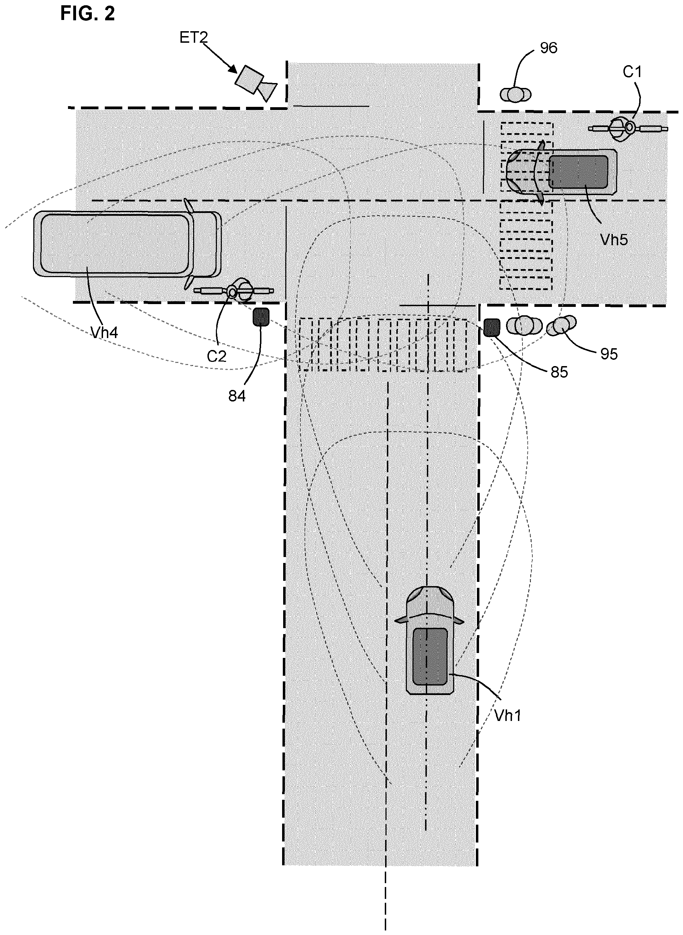

Fig 2 shows other vehicles of interest **Vh4, Vh5** which are travelling on a road which is perpendicular to the road where Vh1 travels.

Also, there may be provided also one or more vehicles of interest which travel in a direction opposite to the direction travelled by vehicle Vh1.

As illustrated in figure 2, the street environment may comprise fixed object like traffic lights denoted **84, 85**.

There is provided a first imaging unit **31** mounted on the first entity **ET1**. The first imaging unit **31** exhibits a first filed-of-view **FOV1**. The first imaging unit **31** is coupled to a first control unit **41** arranged aboard the first entity **ET1.** The first control unit **41**, via the data supplied by the first imaging unit **31** is configured to build a map denoted herein 'first map' **61**. The data about the first map **61** is stored in a memory **71** included or associated with the first control unit **41**.

In the case the first entity **ET1** is a vehicle (i.e. **Vh1**), the first map is a floating map. The floating map is built through a simultaneous localization and mapping process ('SLAM' in short).

The imaging unit **31** can be an imager such as a Lidar system or to a 3D camera/video system.

The imaging unit **31** is used to compute a relative (or floating) localization of the environment, along with the travel of the mobile entity. These systems and methods are known in the art as Simultaneous Localization And Mapping ('SLAM' in short).

Basically, the imaging unit is configured to generate at least a plurality of successive point cloud frames F(j), and construct therefrom, via the above-mentioned simultaneous localization and mapping process (e.g. SLAM process), a floating map FM of a scene travelled by the mobile entity.

A tridimensional scanner (or imager) acquires sets of data points, called point clouds **F(j)**, that are representative of the objects located in a local volume of the environment surrounding said scanner/imager, also called a 'scene'. One example of a commonly used imaging unit is a laser rangefinder such as a light detection and ranging (LIDAR) module which periodically scans its environment using a rotating laser beam. The term "lidartype scanner" may be construed as a scanner using bursts of electromagnetic waves and echoes on objects therefrom, said electromagnetic waves being generally in the near infra-red domain, for example having a wavelength comprised between 600 nanometer and 2000 nanometer, more preferably in the range 1400-1600 nm. Also alternatively, some special Lidars are able to acquire their environment from a common simultaneous illumination, they are known as "flash lidars".

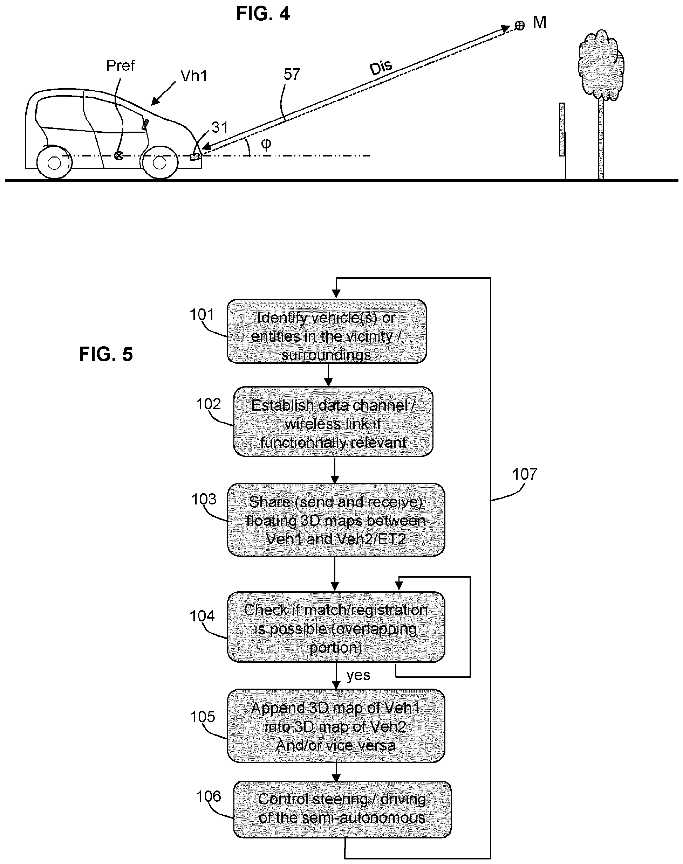

With reference to Figure 4, The imager unit **31** computes a range, corresponding to a distance **Dis** from the imager **31** to a point **M** of reflection of the initial signal on a surface of an object located in the scene. Said range is computed by comparing the timings features of respective transmitted signal and reflected signal, for instance by comparing the time or the phases of emission and reception.

The imager unit **31** exhibits an available field of view denoted **FOV1**.

In one example, the imager unit **1** comprises a laser emitting light pulses with a constant time rate, said light pulses being deflected by a two moving mirrors rotating θ, φ along two respective directions.

The scanning processes performed in real-time, i.e., controllable mirrors are rotated in the space (θ, φ) simultaneously with the firing of burst of electromagnetic waves (**Tx**) θ, φ, along the firing line **57**, to scan the field a view, **FOV1** = from θmin, φmin to θmax, φmax.

Firing period is denoted **Tb**. Tb is as small as a few nanoseconds, or even less.

As soon as all the field of view **FOV1** has been scanned, the first scanner unit issues a point cloud frame which can be represented by a matrix/tensor $Mx(t_z)$, namely an array of points with (θ, φ, **Dis**). $t_z$ is considered as a sampling time, which can be stored as the timestamp for the frame **F(j)**. Scanning or sweeping all the field of view takes a short time, let's say less than 100ms, preferably less than 50ms, possibly even less.

As stated above, the imager unit acquires (collects) point cloud frames F(j) of the scene, each point cloud frame comprising an array of points, each point having as attribute angles and distance (θ, φ, **Dis**) with regard to the imager unit point of view **SLP**. In addition, the imager unit transmits each point cloud frame F(j) to the computing unit **6** as soon as they are available, such that the second point cloud frame can be registered into the floating 3D map **61**.

Each point cloud frame **F(j)** has a pose which is here the position of the focal point of the imaging unit, or a base reference optical/sensing point of the imaging unit. A floating trajectory is determined from the successive **poses** of the of the imaging unit.

Registration process involves a geometrical transformation function TR cause a point cloud frame of interest to match into the floating map of the scene, i.e. find the best possible match into the floating 3D map of the scene.

In practice, there may be a substantial overlap between a newly received frame and the floating 3D map, and this is enough to allow reliable registration and then incrementing the content of the floating 3D map.

The registration process causes the point cloud frame of interest (the latest received) to find the best possible match into the floating 3D map 61 of the scene, which implies mathematical transformation(s) to shift, orientate, spread-in spread-out the array of points of the point cloud frame of interest.

Find the best possible match into the floating 3D map can be done by scanning transformation noted TRi, and searching from the best match with an interactive closest points process [TRi] x [F(j)] to be compared to portions of [RMAP(tk)] (full floating 3D map).

Once the best match TRi=TR$_{best}$ is found, the relevant data [TR$_{best}$] x [F (i)] imported into the floating 3D map 61, which is summarised by the symbolic formula:

$$[RMAP(tk)] \quad \Leftarrow \quad [TR] \ x \ [F(j)].$$

TR is a tensor-to-tensor transform or a tensor-to-matrix transform.

One example of general registration technique can be found in document EP3078935.

Any type of ICP registration technique or the like can also be used.

Each time a new frame F(j) is imported into the general floating map, the corresponding position of the reference point, or pose SLP, is stored in memory.

Therefore the floating map is associated with a series of poses.

The registration and the determination and storage of poses can be performed either locally at the imaging unit 31 or can be performed at the computing unit 6.

Also, additionally or alternatively, one can use one or more video camera(s), either with a plurality of 2D camera and/or one or more TOF 3D camera (TOF means "time of flight").

The successively acquired point clouds **F(j)** can be used to generate 3D maps of the environment seen by the mobile entities during a travel for mapping purposes, for example for identifying fixed objects like a tree, or a road signal, or moving objects like pedestrian, animals.

Optionally, each point cloud **F(j)** can be timestamped, the timestamp corresponding to the moment in time when the point cloud is acquired.

There is provided a second imaging unit **32** mounted on the second entity **ET2**. The second imaging unit **32** exhibits a second filed-of-view **FOV2**. The second imaging unit **32** is coupled to a second control unit **42** arranged aboard the second entity **ET2**. The second control unit **42**, via the data supplied by the second imaging unit **32** is configured to build a map denoted herein 'second map' **62**. The data about the second map **62** is stored in a memory **72** included or associated with the second control unit **42**.

In the case the second entity **ET2** is a stationary equipment, the second map is a map updated along the time. It takes into account evolution of the scene, for example roadworks, evolution of the building construction, growing vegetation, parked vehicle.

In the case the second entity **ET2** is a vehicle (i.e. **Vh2**), the second map is a floating map. The floating map is built through a simultaneous localization and mapping process in a way similar or identical to what is been explained above for the first entity.

Up to this point of the specification, first and second entities ET1, ET2 build, independently from one another, an environmental map, i.e. a floating map whenever the entity is a moving entity (i.e. vehicle).

Advantageously, said maps built on their own will be supplemented by a sharing process as it will be set forth below. Steps denoted **a1** and **a2** are map building processes, respectively for first entity **ET1** and second entity **ET2** as set forth above.

The proposed method can comprise :

Step **b1** consists in determining a **short-list** of entities or vehicles located in the vicinity of the first vehicle Vh1, through a basic geolocation function. GPS is one available solution to identify entities or vehicles located in the vicinity of the first vehicle **Vh1**. However, other like systems are also considered.

We understand by *"vicinity"* of first vehicle, and area with a radius, between 500 m to 1 km from the first vehicle. Any entity situated in this vicinity and that carries communication feature and imaging feature is of interest from the first vehicle standpoint.

The radius of the vicinity can be made adaptive to the traffic condition for example it can be made smaller in urban areas.

There may be provided a filter to eliminate vehicles which are not located on the same floor as per vehicles in a multi-story park building. Altitude delivered by GPS can be taken as determining criterion to disregard other vehicle(s)/entities that are located in the geo vicinity (latitude & longitude) but at different altitudes.

The proposed method can comprise a step of having the communication between first and second entities. There may be provided the following:

Step **b2**- consists in establishing a **data channel** between first and second entities ET1,ET2.
Step **b2**- is involved for nearby entities or vehicles determined as an output of step **b1**-.

According to a first possibility, a direct data channel **15** is established between first and second entities **ET1,ET2.**

According to a second possibility, the data channel is established between first and second entities **ET1,ET2** with an indirect data channel **16**. This case arises when both vehicles Vh1,Vh2 are each connected to a remote server, same or distinct, and in such case the data transit by one or more remote servers when going from **Vh1** to **Vh2** or conversely.

Stated otherwise, the data channel can be an indirect communication link via a third entity. It is not excluded to the third entity be itself a vehicle.

Four direct and indirect data channels, data flow capacity must be sufficient to transmit relevant data in a short time, but it does imply necessarily high capacity data link.

Communication between entities and especially vehicles can be based on Vehicule-to-Vehicule communication, likewise called 'V2V'.

Communication is maintained as long as it is useful for sharing data between two approximate entities, also shown graphically at figure 6.

Communication is ceased under some circumstances, for example when first and second vehicles are away from one another, by at least a predetermined distance (let's say more than 1 km), or when first and second vehicles are moving away from one another, with at least a predetermined relative velocity.

One special case arises when the first and second vehicles are located on different floors in a multi-floor building, like a multi-story park lot. As already stated, altitude discrimination can also lead to ceasing communication from one vehicle to another.

The proposed method can comprise a step of overlapping determination, i.e. determining if the first map **61** and the second map **62** have in common part of the scene. This is denoted step c- of the promoted method.

Since first and second entities **ET1,ET2** have now established communication, communication between the two entities allowed one of them (or both) to determine whether there might be an overlapping portion in their respective maps **61,62.**

As illustrated at figure 7, an overlapping portion **Ov12** between first and second map A,B, is found. Conversely, if there is no intersection between first and second maps, therefore no registration will be possible. We note here that the overlapping determination step is repeated as a looped process as long as the two entities **ET1**, **ET2** remain in communication.

This is apparent from figure 5 where step **104** is looped. Indeed, when talking about vehicles, along the time, the first vehicle **Vh1** can get closer to the second entity (or second vehicle), or conversely can go away from it.

The determination of the presence of overlapping portion may not be a binary decision, this may be the likelihood index, computed from respective geolocation of the two entities. We note here that we don't need precise geolocation, only a rough estimate is enough, the proposed solution can work with the jitter of GPS systems.

Whenever an overlapping portion **Ov12** is likely, the proposed method can comprise a step of receiving, at the first entity **ET1**, part or all the elements of the second map **62**, from the second entity **ET2**. This is denoted step **d1**- of the promoted method.

In other words, the second entity transmit to the first entity at least a portion of its own updated floating map **62**, notably concerning meaningful points, like those relative to moving object in the scene. In a variant, all the latest acquired cloud is transmitted from the second entity to the first entity.

The proposed method can comprise a step of identifying one or more matching candidate solution(s) to register the second map **62** into the first map **61**. We note here that the first map or the second map can already constitute a merge of floating maps from more than one vehicle.

Registration of the second map into the first map is a process similar to what have been described earlier for registering point cloud frame into rolling map.

The registration process causes the point cloud set of the second map to find the best possible match into the first map 61 of the scene, which implies mathematical transformation(s) to shift, orientate, spread-in spread-out the array of points of point cloud set of interest.

Find the best possible match of part or all the second map 62 into the first map 61 can be done by scanning a transformation noted **TRF**, and searching from the best match with an interactive closest points process [TRF] x [F(62)] to be compared to portions the first map 61.

Once the best match TRF=TRF$_{best}$ is found, the relevant data [TR$_{best}$] x [F(62)] imported into the first map 61, in a similar way as above-mentioned for registration.

We note here that the use of landmarks or special features is not necessary in the above process.

Of course it is not excluded to use landmarks if available to facilitate the registration of the second map into the first map. In particular any road equipment or street ancillaries can be used as landmarks. Also it is not excluded to use another vehicle can be used as a landmark.

Further, when talking about vehicles sharing maps, the registration, even without landmarks, can work irrespective of the respective travelling direction of the vehicle as illustrated at figures 1 and 2. The second vehicle can travel perpendicularly to the first one ; second vehicle can travel opposite the first one, there is no constraint in the main direction of of the fields of view of the respective imager units. Therefore, map sharing can occur between vehicles travelling in different directions and having complementary fields-of-view. This is a key advantage to suppress pseudo blind zones and suppressing mask effect for some vehicles.

With reference to figure 5, ref **101** designates the functional block Identify vehicle(s) or entities in the vicinity / surroundings", ref **102** designates the functional block "Establish data channel / wireless link if functionally relevant".

Ref **103** designates the functional block "Share (send and/or receive) floating 3D maps between **Veh1** and **Veh2/ET2**".

Ref **104** designates the functional block "Check if match/registration is possible (overlapping portion)" which gives as a result the above-mentioned overlapping likelihood index, and the registration process is carried out when a likelihood index is above a certain threshold.

Ref **105** designates the functional block "Append 3D map of Veh1 into 3D map of Veh2 And/or vice versa" which give an extended map for first vehicle Vh1 or first entity ET1.

Ref **106** designates the mobile entity control block, in which any control system benefits from the accurate geolocations. We note here that this step 106 is an option in the sense of the present disclosure.

Ref **107** denotes the general iteration of the process.

With reference to figure 6, the process of establishing communication between vehicles, updating a shortlist of connected vehicles, and terminating, negation between two vehicles is summarized.

Ref **201** designates the functional block "Identify vehicle(s) or entities in the vicinity / surroundings", ref **202** designates the functional block "Establish data channel / wireless link if functionally relevant".

Ref **203** designates the functional block "Include a new V2V communication", ref **205** designates the functional block "Discard a previously active V2V communication" ref **204** designates the functional block "Maintain a list of connected' vehicles".

As illustrated at figure 7, in a network logic, it is not required that all the entities share a common overlap of the rolling map, but a continuity between all the rolling maps (ie. Vehicle A and B have an overlap, A doesn't overlap with C, but B overlaps with C, so we can build the A+B+C rolling map). Looking at figure 6, a plurality of proximity pairs is established: A+B, B+C, C+D, D+E, D+F, D+G. We form your kind of a daisychain and obtain therefrom the global map covering A+B+C+D+E+F+G.

There may be provided a third imaging unit 37 mounted on the third entity **ET3**. The third imaging unit **37** exhibits a third filed-of-view **FOV3**. The third imaging unit **33** is coupled to a third control unit **43** arranged aboard the third entity **ET3**. The third control unit **43**, via the data supplied by the third imaging unit **37** is configured to build a map denoted herein 'first map' **63**.

We note here that the first imaging unit 31 and/or the second imaging unit 32 can be a **Lidar** scanner. Also the third imaging unit **37** mounted can be a **Lidar** scanner.

The field of view of the imaging unit(s) can have forward depth of at least **100 m**, preferably at least **150 m**. Since the floating maps are cumulative maps they extend over a length which is greater than the depth of the imaging units; for example for moving vehicle, the length of the floating map can be as long as 500m, or even up to 1 Km.

In the case the third entity **ET3** is a vehicle (i.e. **Vh3**), the third map is a floating map. As per first and second entities, the floating map is built through a simultaneous localization and mapping process.

There may be a limit to the depth of the first and second rolling maps, due to memory and processing constraints. Each rolling map can contain several thousands points for example. A way to keep the more interesting points can be a proximity criterion rather than a recentness criterion, i.e. we keep points that are located at a distance below a certain threshold. However, points belonging to an assumed moving object can also be retained in the rolling map even though there are at a distance above the threshold.

Typical frame rate for imagers **31,32** is comprised between 10 Hz and 30 Hz, it can be around 20 Hz. Angular resolution for the imager unit like a Lidar can typically be comprised between 0.05° and 0.5°, although other resolution is not excluded.

There may be provided additional sensors **33,34** of any type to supplement data with regard to already mentioned imagers **31,32**.

**Claims**

1. **A** method carried out in a system comprising at least a first imaging unit (31) mounted on a first entity (ET1), the first entity being formed as a first vehicle (Vhl), at least a second imaging unit (32) mounted on a second entity (ET2) independent from the first vehicle (Vhl), the method comprising :

   **a1**- building, from the first imaging unit (31), a first map (61), formed as a floating map, through a simultaneous localization and mapping process,
   **a2**- building, from the second imaging unit (32), a second map (62),
   **b2**- establishing a data channel (15;16) between first and second entities (ET1,ET2),
   **c**- determining if there is at least an overlapping portion (Ov12) between first and second maps (61,62),

**d1**- receiving, at the first entity (ET1), part or all the elements of the second map (62), from the second entity (ET2),

**e1**- identifying matching candidate solutions to register the second map (62) into the first map (61),

**f1**- registering and appending the second map to the first map of first vehicle (Vh1).

2. The method according to claim 1, wherein the second entity is a second vehicle (Vh2), moving independently from the first vehicle (Vhl), wherein the second map (62) is formed as a floating map build through a simultaneous localization and mapping process, the method comprising :

**d2**- receiving, at the second entity (ET2), part or all the elements of the first map (61), from the first vehicle (Vh1).

3. The method according to claim 2, wherein the method further comprises:

**e2**- identifying matching candidate solutions to register the first map into the second map,
**f2**- registering and appending the first map to the second map of the second vehicle (Vh2).

4. The method according to any of the claims 1 to 3, further comprising, before step b2-, :
**b1**- determine a short-list of entities or vehicles located in the vicinity of the first vehicle (Vh1), through a basic geolocation function.

5. The method according to any of the claims 1 to 4, wherein the data channel (15) is a direct communication link.

6. The method according to any of the claims 1 to 4, wherein the data channel (16) is an indirect communication link via a third entity.

7. The method according to any of the claims 1 to 6, wherein the first imaging unit (31) and/or the second imaging unit (32) is a Lidar scanner.

8. The method according to any of the claims 1 to 7, wherein the first and second entities (ET1,ET2) has no common clock and respectively build first and second maps asynchronously with regard to one another.

9. The method according to any of the claims 2 to 3, wherein the first vehicle (Vh1) is travelling on a first lane which is not parallel to a second lane where the second vehicle (Vh2) is travelling.

10. The method according to any of the claims 2 to 3, the first vehicle is travelling on a first lane which is parallel and in opposite direction with regard to a second lane where the second vehicle is travelling.

11. The method according to any of the claims 1 to 10, wherein one or more geo-located landmarks are used to determine at least an overlapping portion between first and second maps (61,62).

12. The method according to any of the claims 1 to 11, wherein steps d- to f- are repeated until the first and second vehicles are away from one another, by at least a predetermined distance.

13. The method according to any of the claims 1 to 12, wherein steps d- to f- are repeated until the first and second vehicles are located on different floors in a multi-floor building.

14. The method according to any of the claims 1 to 13, wherein there is provided at least a third imaging unit (37) mounted on a third vehicle or mounted on a road/street equipment, and the method comprises a registration of the images outputted by the third imaging unit (37) into the shared map between first and second maps.

15. A **system** configured to carry out the method according to any of the claim 1 to 14.

16. A **vehicle** comprising a system according to claim 15.

**FIG. 1**

**FIG. 2**

## FIG. 3

## FIG. 4

## FIG. 5

| 101 | Identify vehicle(s) or entities in the vicinity / surroundings |
| 102 | Establish data channel / wireless link if functionnally relevant |
| 103 | Share (send and receive) floating 3D maps between Veh1 and Veh2/ET2 |
| 104 | Check if match/registration is possible (overlapping portion) |
| 105 | Append 3D map of Veh1 into 3D map of Veh2 And/or vice versa |
| 106 | Control steering / driving of the semi-autonomous |

yes

107

**FIG. 6**

Identify vehicle(s) in the
vicinity / surroundings    201

Establish a short list of vehicles
for which a map sharing is
relevant    202

203    Include a new
V2V
communication

Discard a
previously
active V2V
communication    205

204    Maintain a list of
connected' vehicles

**FIG. 7**

Ov12

B

C

E

F

D

A

G

Europäisches
Patentamt

European
Patent Office

Office européen
des brevets

# EUROPEAN SEARCH REPORT

Application Number

EP 19 30 6455

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 540 464 A2 (BAIDU ONLINE NETWORK TECHNOLOGY BEIJING CO LTD [CN]) 18 September 2019 (2019-09-18) * paragraphs [0001], [0002], [0006] - [0009], [0011], [0013] - [0018], [0029] - [0039], [0042] - [0057]; figures 1-4 * | 1-16 | INV. G01S17/931 G01S17/89 G01S17/87 G01S7/00 G01S17/86 |
| X | US 2010/198513 A1 (ZENG SHUQING [US] ET AL) 5 August 2010 (2010-08-05) * paragraphs [0019] - [0032], [0037], [0040] - [0042]; figures 1-5 * | 1-16 | |
| X | EP 3 477 342 A1 (HARMAN INT IND [US]) 1 May 2019 (2019-05-01) * paragraphs [0004], [0010], [0013], [0014], [0019], [0020], [0032] - [0034]; figures 1-5 * | 1-16 | |

TECHNICAL FIELDS
SEARCHED        (IPC)

G01S

The present search report has been drawn up for all claims

| Place of search | Date of completion of the search | Examiner |
|---|---|---|
| Munich | 19 May 2020 | Schmelz, Christian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 30 6455

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2020

| Patent document cited in search report | | Publication date | Patent family member(s) | | Publication date |
|---|---|---|---|---|---|
| EP 3540464 | A2 | 18-09-2019 | CN | 109212540 A | 15-01-2019 |
| | | | EP | 3540464 A2 | 18-09-2019 |
| | | | JP | 2020042013 A | 19-03-2020 |
| | | | US | 2019353790 A1 | 21-11-2019 |
| US 2010198513 | A1 | 05-08-2010 | CN | 101799992 A | 11-08-2010 |
| | | | DE | 102010006084 A1 | 07-10-2010 |
| | | | US | 2010198513 A1 | 05-08-2010 |
| EP 3477342 | A1 | 01-05-2019 | CN | 109696692 A | 30-04-2019 |
| | | | EP | 3477342 A1 | 01-05-2019 |
| | | | US | 2019120964 A1 | 25-04-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3078935 A